# EUROPEAN PATENT APPLICATION

(11) **EP 0 702 376 A1**
(43) Date of publication of application: **20.03.1996**
(21) Application number: 95113787.6
(22) Date of filing: 01.09.1995
(51) Int. Cl.: H01B 1/08, H01M 8/10

(54) **Hydrogen ion conductor**

(30) Priority: 02.09.1994 JP 234283/94; 27.09.1994 JP 257531/94
(71) Applicant: Abe, Yoshihiro, Nisshin-Shi, Aichi prefecture, 470-01 (JP); NIPPON MUKI CO., LTD., Tokyo, 101 (JP)
(72) Inventor: Kawashima, Koichi, c/o Nippon Muki Co., Ltd., Fuwa-Gun, Gifu Prefecture, 503-21 (JP); Abe, Yoshihiro, Aichi prefecture, 470-01 (JP)
(74) Representative: Schmidt-Evers, Jürgen, Dipl.-Ing.

(57) **Abstract**

A hydrogen ion conductor consists of an amorphous material having a hydrogen ion conductivity ranging from 10⁻¹ to 10⁻⁶ S/cm as determined at room temperature. The hydrogen ion conductor has a high hydrogen ion conductivity and can be formed into any shape such as thin films or bulk materials free of any grain boundary. Therefore, it can be used in various fields such as inorganic ion exchangers, oxygen-hydrogen fuel cells, electrolytes for electrolysis of water, solid electrolyte sensors such as hydrogen sensors, solid electrolytes for complete solid type nickel-hydrogen cells, acid catalysts and membranes for electrodialysis.

## Description

### BACKGROUND OF THE INVENTION

The present invention relates to a hydrogen ion conductor which consists of an amorphous material having a high hydrogen ion conductivity and more specifically to a hydrogen ion conductor which can be used in various fields such as inorganic ion exchangers, oxygen- hydrogen fuel cells, electrolytes for electrolysis of water, solid electrolyte sensors such as hydrogen sensors, solid electrolytes for complete solid type nickel-hydrogen cells, acid catalysts and membranes for use in the electrodialysis.

Among the conventional amorphous materials, glass materials prepared by the melting technique in general has a low hydrogen ion conductivity at room temperature on the order of 10⁻⁸ to 10⁻²⁰ S/cm and thus almost no hydrogen ion undergoes migration. There has been known a super ion-conducting glass having a high conductivity on the order of 10⁻² to 10⁻³ S/cm. In the super ion-conducting glass, however, silver ions move around within the glass containing a large amount of silver ions and accordingly, the super ion-conducting glass cannot be applied to the foregoing fields of application.

On the other hand, there has been known a crystalline zirconium phosphate as a hydrogen ion conductor, but this is a crystalline material and accordingly, suffers from various problems. For instance, grain boundaries are present therein, it cannot be formed into a product having a large capacity and a large surface area and it cannot be formed into films.

As has been described above, there has not yet been known any amorphous material which has a high hydrogen ion conductivity and which can be formed into any shape such as thin films or bulk materials free of any grain boundary. Therefore, there has been a demand for the development of such amorphous materials.

### SUMMARY OF THE INVENTION

Accordingly, it is an object of the present invention to provide a hydrogen ion conductor which comprises an amorphous material exhibiting a high hydrogen ion conductivity.

According to the present invention, the foregoing object can effectively be accomplished by providing a hydrogen ion conductor which consists of an amorphous material having a hydrogen ion conductivity ranging from about 10⁻¹ to 10⁻⁶ S/cm as determined at room temperature.

### BRIEF DESCRIPTION OF THE DRAWINGS

Fig. 1 is a graph showing the hydrogen ion conductivity of the zirconium phosphate gel prepared in Example 1 as a function of 1000/T (T: temperature in Kelvin); and
Fig. 2 shows the DTA and TG curves observed for the zirconium phosphate gel prepared in Example 1.

### DESCRIPTION OF THE PREFERRED EMBODIMENTS

The present invention will hereinafter be described in more detail.

The amorphous materials usable in the present invention include, for instance, phosphate type substances such as zirconium phosphate, titanium phosphate and tungsten phosphate.

The amorphous materials used herein preferably has a hydrogen ion conductivity on the order of 10⁻² to 10⁻⁵ S/cm as determined at room temperature.

These amorphous materials are prepared by the sol-gel method as will be detailed below.

In general, the sol-gel method comprises the steps of subjecting a solution of an organometal compound such as a metal alkoxide or an inorganic metal salt as a starting material to, for instance, hydrolyzation, dehydration, drying and/or firing to thus give a solid product (a substance in a gel, glass or crystalline state). The term "amorphous material" herein used means these materials in the gel or glass state among others.

The starting material used in the preparation of the amorphous material as the hydrogen ion conductor according to the present invention may be a solution of, for instance, an alkoxide, chloride, hydroxide, nitrate or sulfate of a desired metal. In the present invention, these solutions may be used alone or in any combination. To obtain such an amorphous material, it is preferred to use at least one element which is liable to form the skeletal structure of the amorphous material. For instance, a desired gel can easily be prepared if using a silicic acid alkoxide such as ethyl silicate as a silicate material or a phosphoric acid alkoxide such as phosphoric acid propoxide as a phosphate material. The phosphate materials are preferably used to prepare hydrogen ion conductors having a high hydrogen ion conductivity. These components are mixed with at least one inorganic metal compound, selected from, for instance, alkoxides or chlorides of other metals as a second component.

More specifically, these phosphate materials are highly hygroscopic and accordingly, do not permit the production of stable amorphous materials. For this reason, a sol of another metal as the second component is added to the first component to obtain a stable amorphous material. The second component is not restricted to a specific one, but preferred are solutions of alkoxides or inorganic salt such as chlorides of metals, for instance, alkali metals such as Na, K and Li; alkaline earth metals such as Ca and Mg; elements of Group IVa such as Ti and Zr; elements of Group Va such as Nb and Ta; and elements of Group VIa such as Mo and W, while taking into consideration the stability of the resulting amorphous material. In particular, preferably used are, for instance, zirconium alkoxides, titanium alkoxides and tungsten alkoxides because of their high hydrolysis rates and uniform amorphous materials can be produced through the use of these alkoxides.

Preferably, the phosphate type amorphous material comprises phosphorus and zirconium in a ratio of 50/50 expressed in terms of molar ratio: phosphorus pentoxide/zirconium oxide (zirconia), i.e., has an approximately metaphosphate composition with respect to phosphorus and zirconium, but those having a molar ratio ranging from 80:20 to 40:60 are stable and have a high hydrogen ion conductivity.

To prepare an amorphous material having a desired composition starting from a mixed alkoxide, the hydrolysis thereof is carried out by mixing, in advance, metal alkoxides as starting materials in such a manner that the resulting mixture has a desired composition with respect to oxides and appropriately adding a catalyst for hydrolysis such as HCl and water and an optional alcohol as a diluent. After the completion of the hydrolysis, the excess alcohol, and the alcohols and water formed through the hydrolysis are gradually removed to accelerate the dehydration-condensation reaction and to thus give a desired amorphous material.

The foregoing amorphous material includes a large quantity of hydrogen ions and molecular water and has a large number of sites available for the hydrogen ion-migration and is accordingly, excellent in the hydrogen ion conductivity.

The glass in general contains hydrogen ions in the form of -OH groups in an amount ranging from 0.01 to 2% by weight. In case of the silicate type glass, the bonding strength of O-H group is very high. Therefore, it has a low hydrogen ion conductivity at room temperature on the order of 10⁻¹⁰ to 10⁻²⁰ S/cm and almost no hydrogen ion undergoes migration. For this reason, the electrical conductivity of the silicate type is often dominated by alkali ions such as Na ⁺ and metal ions such as Ag ⁺ ions and the hydrogen ion conduction is apparently almost equal to zero. This is because the silicate type glass forms a three-dimensional network structure round the Si-O bonds and it is accordingly difficult to dissociate O-H groups present in Si-OH bonds into hydrogen ions. Moreover, even if the groups are dissociated into hydrogen ions, the concentration of -OH groups is small and accordingly, there is not sufficient sites available for the dissociated hydrogen ions in the neighborhood thereof.

On the other hand, the phosphate type glass has highly ionic oxygen atoms bonded to P through a double bond and an amount of molecular water. Moreover, the phosphate type glass is liable to incorporate hydrogen ions therein to thus eliminate the branched structure thereof. For this reason, a large quantity of hydrogen ions can easily be incorporated into the phosphate type glass. In this case, the bond energy of the O-H bond is substantially smaller than that observed for the silicate type glass because of the presence of hydrogen bonds with highly ionic oxygen ions. In other words, hydrogen ions can easily be released from the glass. Moreover, -OH bonds are present in the neighborhood and this makes the migration of hydrogen ions easy. The hydrogen ion conduction is a kind of hopping conduction in which hydrogen ions move towards the neighboring sites and therefore, the phosphate type glass is liable to exhibit a high electrical conductivity due to hydrogen ions migration.

As has been discussed above, however, the phosphate glass per se undergoes severe deliquescence, in general has low stability and accordingly, a second component should be added thereto for the improvement of the stability. Examples of preferred second components are alkali metals, alkaline earth metals, elements of Group IVa, elements of Group Va and elements of Group VIa. The ratio of the phosphate glass to the second component is approximately equal to that of metaphosphate composition as expressed in terms of molar ratio. For instance, K₂ O·P₂O₅, BaO·P₂O₅ and ZrO₂·P₂O₅ are suitably used. If the amount of the second component exceeds that corresponding to the metaphosphate composition, the concentration of hydrogen ions present therein is reduced and the electrical conductivity is correspondingly apt to be reduced. On the other hand, the smaller the amount of the second component, the higher the hydrogen ion concentration, but the chemical stability of the product is apt to be impaired. Incidentally, the addition of an element of Group IVa such as Si is suitable for the vitrification and therefore, it may be used as a part of the phosphate glass components.

Then the amount of hydrogen ions available for the migration thereof will hereunder be discussed in detail. In general, the glass is prepared by melting a starting material at a temperature of not less than 1000 °C and then quenching the resulting melt. According to this melting method, the moisture and the water of crystallization present in the starting materials are almost completely evaporated and accordingly, only a small amount of hydroxyl groups (-OH) in general remains in the resulting glass. In other words, the concentration of hydrogen ions present in the glass prepared according to the melting method commonly employed is dominated by the conditions for melting and thus it is impossible to intentionally load the glass with a large amount of hydrogen ions. It has also been known a method for increasing the hydrogen ion concentration in a glass which comprises once forming a glass and then treating the glass in an autoclave to thus diffuse moisture into the glass. However, this method can achieve only a limited hydrogen concentration and it is also difficult to hold the product in the glass state over a long time period, i.e., the product is degenerated and converted into a crystalline product. Moreover, it suffers from a problem of safety. Therefore, the method is not so useful from the industrial standpoint.

The sol-gel technique is a method for preparing a glass product through various processes such as dehydration, drying, condensation and firing while using a solution (sol) as a starting material, i.e., the sol-gel method does not require the use of a process for once melting the starting material at a high temperature unlike the melting method. Moreover, the solution as the starting material includes moisture or hydroxyl groups inclusive of those initially included in ingredients or the water generated through the hydrolysis process. Therefore, the gel or glass prepared by this method has a high hydrogen ion concentration which may contribute to the hydrogen ion conduction, a large number of sites available for the hydrogen ion-migration and an amount of molecular water. Thus, the product prepared by this method shows a high electrical conductivity due to the presence of hydrogen ions.

In particular, the phosphate type glass has a structure suitable for the hydrogen ion uptake as has been described above and it does not undergo deliquescence even when a large amount of hydrogen ions are incorporated into the structure because of the presence of the added second component. For this reason, the product may exhibit an improved higher electrical conductivity.

The hydrogen ion concentration in the amorphous material prepared by this method depends on the degree of drying, the firing temperature during the production of the gel or glass and the composition thereof. For this reason, it would be recommended that if the resulting amorphous material is used at a temperature near room temperature, the material should be dried, in advance, at a temperature higher than room temperature to thus make the hydrogen ion concentration constant. Moreover, if it is used as a solid electrolyte for a fuel cell whose temperature is not less than 300 °C, an amorphous material having stable high conductivity can be obtained by heat-treating at a temperature about 50 to 100 °C higher than that at which the material is practically used.

The amorphous material may be used in the form of a film or a bulk material depending on the applications thereof. If the amorphous material is used in the form of a film, the sol-gel method is advantageous in that the method easily permits the production of such films in an industrial scale, that any substrate for forming films may be used since the method is free of any step requiring a temperature of not less than 1000 °C and that the thickness of the film may easily be controlled.

As has been discussed above in detail, the present invention permits the production of a hydrogen ion conductor consisting of an amorphous material having a hydrogen ion conductivity ranging from about 10⁻¹ to 10⁻⁶ S/cm as determined at room temperature and the hydrogen ion conductor may be used in various fields such as inorganic ion exchangers, oxygen-hydrogen fuel cells, electrolytes for electrolysis of water, solid electrolyte sensors such as hydrogen sensors, solid electrolytes for complete solid type nickel-hydrogen cells, acid catalysts and membranes for electrodialysis.

The present invention will hereinafter be explained in more detail with reference to the following non-limitative working Examples, but the present invention is not restricted to these specific Examples.

### Example 1

In this Example, zirconium propoxide (Zr(OPr)₄) was used as a zirconium alkoxide and tri-n-propyl phosphate (PO(OPr)₃₋ₓ(OH)ₓ) was used as a phosphoric acid alkoxide. tri-n-propyl phosphate was prepared by dissolving P₂O₅ in 2-propanol.

Zr(OPr)₄ and PO(OPr)₃₋ₓ(OH)ₓ (x = 1, 2) were mixed together in a 1:4 (molar ratio) mixed solvent of ethanol and 2-propanol, followed by addition of HCl as a catalyst for hydrolysis and hydrolysis at room temperature. Then the resulting mixed sol was gelled at a temperature ranging from 60 to 120 °C for 2 weeks to give a hard gel and thereafter dried at 60, 70, 100 and 120 °C.

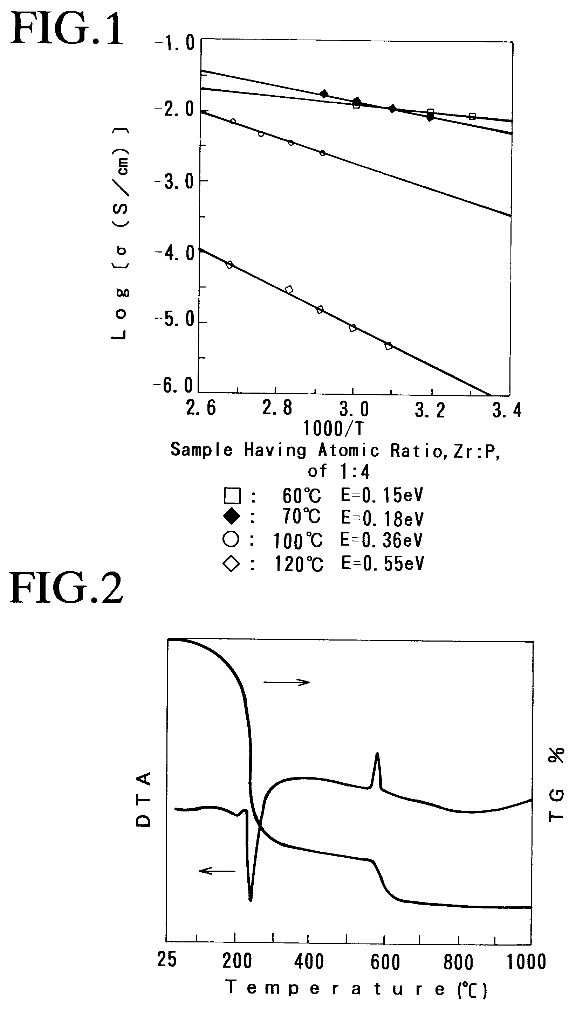

Each gel dried at each corresponding temperature was inspected for the electrical conductivity at each temperature according to the three-terminal method. Fig. 1 shows the relation between the electrical conductivity and temperature observed for the plate-like specimen whose atomic ratio: Zr/P was 1:4 and produced from the gel dried at each temperature. In Fig. 1, E represents the activation energy for conduction. As seen from Fig. 1, the gels dried at 60, 70, 100 and 120 °C had a high hydrogen ion conductivity on the order of 10⁻² to 10⁻³ S/cm as determined at room temperature. This indicates that the resulting amorphous materials are sufficient for use as hydrogen ion conductors.

Moreover, these gels were subjected to an accelerated test (35 °C × one month) corresponding to the storage at room temperature (25 °C) for one year, but there was hardly observed any change in the electrical conductivity.

In addition, the resulting zirconium phosphate gel was inspected for the DTA and TG curves. The results thus obtained are shown in Fig. 2. As seen from Fig. 2, the weight loss observed at a temperature of less than 300 °C indicates that the organic solvent is removed in addition to water molecules and the weight loss corresponding to the overall loss of about 6.5% by weight observed at 560 °C is caused due to the removal of the chemically hydrogen-bonded water molecules.

### Example 2

The same procedures used in Example 1 were repeated except that titanium-i-propoxide and tri-n-propyl phosphate were used in a molar ratio: Ti(O-i-Pr)₄ : PO(OPr)₃₋ₓ(OH)ₓ of 1:4 to give a gel. The hydrogen ion conductivity of the gel dried at 70 °C was found to be 10⁻⁴ to 10⁻⁵ S/cm as determined at room temperature. This indicates that the resulting amorphous material is sufficient for use as a hydrogen ion conductor.

### Example 3

The same procedures used in Example 1 were repeated except that tungsten- ethoxide (W(OC₂H₅)₆) and tri-n-propyl phosphate were used in a molar ratio: W(OC₂H₅)₆ : PO(OPr)₃₋ₓ(OH)ₓ of 1:4 to give a gel. The hydrogen ion conductivity of the gel dried at 70 °C was found to be 10⁻³ to 10⁻⁴ S/cm as determined at room temperature. This indicates that the resulting amorphous material is sufficient for use as a hydrogen ion conductor.

## Claims

1. A hydrogen ion conductor consisting of an amorphous material having a hydrogen ion conductivity ranging from 10⁻¹ to 10⁻⁶ S/cm as determined at room temperature.

2. The hydrogen ion conductor of claim 1 wherein the amorphous material is a phosphate type amorphous material.

3. The hydrogen ion conductor of claim 2 wherein the phosphate type amorphous material is zirconium phosphate.

4. The hydrogen ion conductor of claim 3 wherein the ratio of phosphorus to zirconium present in the phosphate type amorphous material ranges from 80:20 to 40:60 as expressed in terms of the molar ratio: phosphorus pentoxide/zirconium oxide.

5. The hydrogen ion conductor of claim 2 wherein the phosphate type amorphous material is titanium phosphate.

6. The hydrogen ion conductor of claim 2 wherein the phosphate type amorphous material is tungsten phosphate.

7. The hydrogen ion conductor according to any one of claims 1 to 6 wherein the amorphous material is prepared by a sol-gel method.
